# EUROPÄISCHE PATENTSCHRIFT

(11) **EP 3 948 027 B1**
(45) Veröffentlichungstag und Bekanntmachung des Hinweises auf die Patenterteilung: **21.05.2025**
(21) Anmeldenummer: 20711499.2
(22) Anmeldetag: 27.02.2020
(51) Int. Cl.: F16H 57/029, F16H 57/031, F16H 57/033, F16H 57/04

(54) **GETRIEBE UND VERFAHREN ZUM HERSTELLEN UNTERSCHIEDLICHER GETRIEBE, INSBESONDERE EINER GETRIEBEBAUREIHE**
TRANSMISSION AND METHOD FOR PRODUCING DIFFERENT TRANSMISSIONS, IN PARTICULAR A RANGE OF TRANSMISSIONS
BOÎTE DE VITESSES ET PROCÉDÉ DE FABRICATION DE DIFFÉRENTES BOÎTES DE VITESSES, EN PARTICULIER D'UNE SÉRIE DE BOÎTES DE VITESSES

(30) Priorität: 26.03.2019 DE 102019002191
(43) Veröffentlichungstag der Anmeldung: 09.02.2022
(73) Patentinhaber: SEW-EURODRIVE GmbH & Co. KG, 76646 Bruchsal (DE)
(72) Erfinder: SCHÜTTERLE, Ingo, 76646 Bruchsal (DE); SCHWAN, Tobias, 69168 Wiesloch (DE); FRANK, Daniel, 76703 Kraichtal (DE)
(86) Internationale Anmeldenummer: PCT/EP2020/025098
(87) Internationale Veröffentlichungsnummer: WO 2020/192964

(56) Entgegenhaltungen:
- EP-A1- 2 674 645
- EP-A1- 2 674 645
- WO-A1-2012/123045
- WO-A1-2012/123045
- DE-A1- 102009 014 314
- DE-A1- 102009 014 314
- DE-A1- 102010 053 808
- DE-A1- 102010 053 808
- DE-A1- 102017 206 598
- DE-A1- 102017 206 598
- US-A- 3 681 919
- US-A- 3 681 919
- US-A- 3 864 990
- US-A- 3 864 990

## Beschreibung

Die Erfindung betrifft ein Getriebe mit einem ersten Gehäuseteil und ein Verfahren zum Herstellen unterschiedlicher Getriebe, insbesondere einer Getriebebaureihe.

Es ist allgemein bekannt, dass ein Getriebe ein Gehäuseteil aufweist.

**Aus der** EP 2 674 645 A1 **ist als nächstliegender Stand der Technik ein Ölstauring bekannt.**

**Aus der** WO 2012 / 123045 A1 **ist eine Getriebevorrichtung bekannt.**

**Aus der** DE 10 2017 206598 A1 **ist ein Getriebgehäuse mit integrierten Ölkanälen bekannt.**

**Aus der** DE 10 2010 053808 A1 **ist ein Windkraftprüfstand bekannt.**

**Aus der** US 3 681 919 A **ist ein hydrostatisches Maschinensystem bekannt.**

**Aus der** US 3 864 990 A **sind Getriebe bekannt.**

**Aus der** DE 10 2009 014 314 A1 **ist ein Getriebe bekannt.**

Der Erfindung liegt daher die Aufgabe zugrunde, ein Getriebe einfach und kostengünstig herstellbar zu machen.

Erfindungsgemäß wird die Aufgabe bei dem Getriebe nach den in Anspruch **1** und bei dem Verfahren nach den in Anspruch **11** angegebenen Merkmalen gelöst.

Weitere Vorteile ergeben sich aus den Unteransprüchen.

Die Erfindung wird nun anhand von schematischen Abbildungen näher erläutert:
In den Figuren 1.1 bis 6.2 ist im linken oberen Bereich die Schnittrichtung durch ein jeweiliges Getriebe dargestellt. Das zugehörige Schnittbild ist in der jeweiligen Figur ebenfalls dargestellt.
In der Figur 1.1 ist ein erster Schnitt durch ein erfindungsgemäßes Getriebe mit Tauchschmierung und Wellendichtring dargestellt. In der Figur 1.2. ist ein anderer Schnitt durch dieses Getriebe dargestellt.
In der Figur 2.1 ist ein erster Schnitt durch ein erfindungsgemäßes Getriebe mit Tauchschmierung und staubgeschützte Wellendichtung dargestellt. In der Figur 1.2. ist ein anderer Schnitt durch dieses Getriebe dargestellt.
In der Figur 3.1 ist ein erster Schnitt durch ein erfindungsgemäßes Getriebe mit Tauchschmierung und berührungsloser Dichtung dargestellt. In der Figur 3.2. ist ein anderer Schnitt durch dieses Getriebe dargestellt.
In der Figur 4.1 ist ein erster Schnitt durch ein erfindungsgemäßes Getriebe mit Druckschmierung und Wellendichtring dargestellt. In der Figur 4.2. ist ein anderer Schnitt durch dieses Getriebe dargestellt.
In der Figur 5.1 ist ein erster Schnitt durch ein erfindungsgemäßes Getriebe mit Druckschmierung und staubgeschützte Wellendichtung dargestellt. In der Figur 5.2. ist ein anderer Schnitt durch dieses Getriebe dargestellt.
In der Figur 6.1 ist ein erster Schnitt durch ein erfindungsgemäßes Getriebe mit Druckschmierung und berührungsloser Dichtung dargestellt. In der Figur 6.2. ist ein anderer Schnitt durch dieses Getriebe dargestellt.

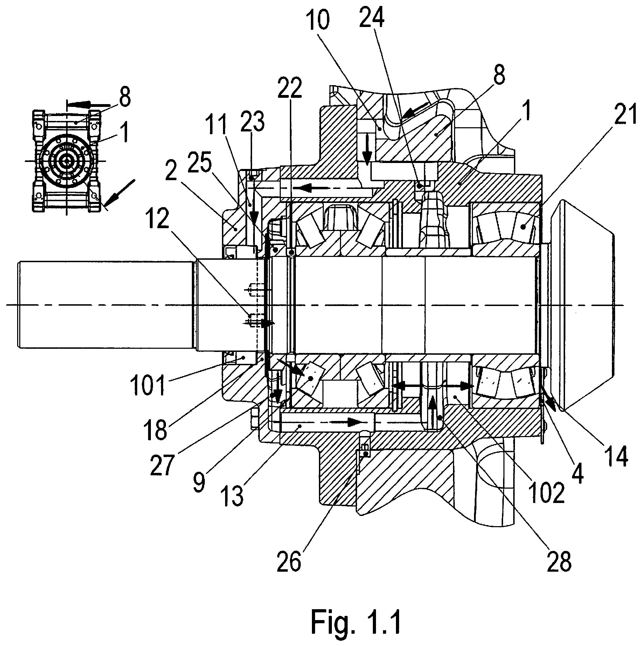

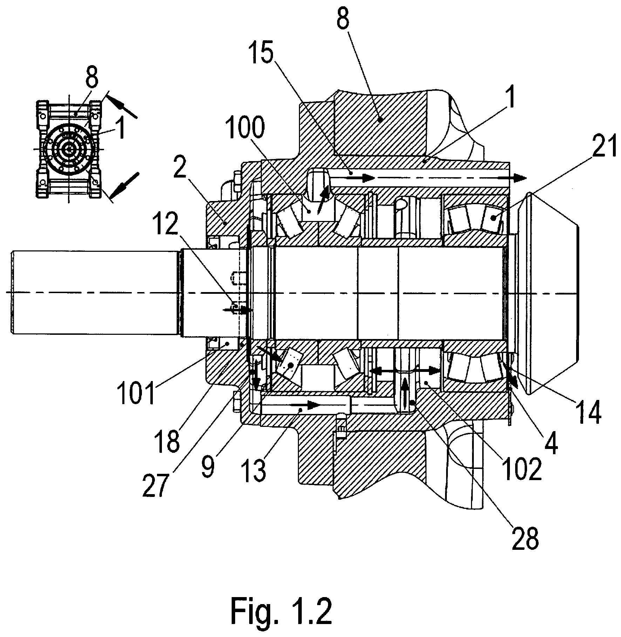

Wie in Figur 1.1 und 1.2 gezeigt, weist das Getriebe eine Tauchschmierung auf. Dabei tauchen die drehenden Verzahnungsteile in den Ölsumpf des Getriebes ein und schleudern Öl im Innenraum des Getriebes bis zu dessen oberer Innenwand oder Decke, an einem Gehäuseteil 8 des Getriebes ausgebildet ist. Von dort heruntertropfendes Öl wird in einer Sammelrinne aufgefangen und in einen Einlass 10 für Öl geleitet, welcher in ein Gehäuseteil 1 eingearbeitet ist.

Dieser Einlass 10 weist eine im Gehäuseteil 1 eingearbeitete Radialbohrung auf, welche in eine vom Gehäuseteil 8 des Getriebes abgedeckte Ausnehmung des Gehäuseteils 1 mündet.

Von dieser Ausnehmung führt eine axiale Bohrung das Öl weiter und mündet in eine axiale Bohrung eines Deckelteils 2, welches auf das Gehäuseteil 1 aufgesetzt ist.

Das Gehäuseteil 1 nimmt ein erstes Schräglager 9, insbesondere Kegelrollenlager, eines Festlagers und ein als Loslager fungierendes zweites Schräglager 21, insbesondere Pendelrollenlager, zur Lagerung der eintreibenden Welle auf, welche drehfest verbunden ist mit einem Kegelritzel, das im Eingriff steht mit einem in den Figuren nicht dargestellten Tellerrad, also Gegenrad des Kegelritzels, welches eine zweite Getriebestufe des Getriebes antreibt.

Der Innenring des Schräglagers 21 ist gegen eine an der eintreibenden Welle ausgebildete Stufe angestellt. Zwischen dem Innenring der Schräglager (9, 21) ist eine Abstandshülse auf der eintreibenden Welle angeordnet. Der Innenring des ersten Schräglagers 9, insbesondere des zweigeteilt ausgeführten Festlagers, wird von einer auf einen Außengewindebereich der eintreibenden Welle aufgeschraubten Wellenmutter 25 über einen Distanzring 22 axial mit Druck beaufschlagt, insbesondere so, dass die Lager eingestellt sind.

Die Außenringe der Lager sind einerseits gegen eine jeweilige im Gehäuseteil 1 ausgebildete Stufe angestellt und andererseits mittels Sicherungsring und/oder Abstandsringen axial festgelegt.

Das Deckeilteil 2 deckt das Festlager ab und ist hierzu mit einer zwischengeordneten Flachdichtung, insbesondere öldicht, verbunden mit dem Gehäuseteil 1. Statt der Flachdichtung ist aber auch eine ein Flächendichtmittel aufweisende Dichtung verwendbar, insbesondere wobei als Flächendichtmittel ein Klebstoff verwendet wird.

Das Deckelteil 2 nimmt einen Wellendichtring auf, der auf der eintreibenden Welle läuft.

Das Deckelteil weist eine Rückhaltewand 18 auf, welche nach radial innen zur eintreibenden Welle hin hervorragt. Zwischen der Rückhaltewand 18 und dem Wellendichtring ist eine radiale Vertiefung ausgeformt, in welcher sich ein Ölsumpf 101 sammelt. Aus diesem Ölsumpf wir bei Drehbewegung der eintreibenden Welle diese benetzt mit Öl und auch die Dichtlippe des Wellendichtrings mit Öl versorgt.

Zwischen der eintreibenden Welle und der Rückhaltewand 18 ist ein schmaler Spalt vorhanden, so dass keine Öldichtheit zu einem am Gehäuseteil 1 ausgeformten Ringraum 27, welcher die Wellenmutter 25 radial umgibt, besteht. Außerdem ist ein höher als die Rückhaltewand 18 angeordneter Überlaufkanal 12 ausgebildet am Gehäuseteil 1, welcher in den Ringraum 27 mündet und vom axial zwischen dem Wellendichtring und der Rückhaltewand 18 ausgebildeten radialen Vertiefung befüllbar ist.

Das durch die Axialbohrung des Deckelteils 2 zugeführte Öl wird über eine Radialbohrung in denjenigen Bereich geführt, welcher axial zwischen dem Wellendichtring und der Rückhaltewand 18 am Deckelteil 2 ausgebildet ist.

Somit ist also ein erster Kanal im Gehäuseteil 1 ausgebildet, welcher Öl über die Ausnehmung zuführt zum im Deckelteil 2 ausgebildeten Kanal 11.

Der die Wellenmutter 25 radial umgebende Ringraum 27 ist zum Wälzkörper des Lagers 9 hin offen ausgeführt, so dass Öl aus dem Ringraum 27 das erste Schräglager 9 des Festlagers schmiert.

Darüber hinaus mündet ein Ausgleichskanal 13 in dem ersten Ringraum 27 und führt das Öl in einen zweiten Ringraum 28, welcher axial zwischen den Lagern (9, 21), insbesondere zwischen dem Festlager und dem Loslager, am Gehäuseteil 1 ausgebildet ist.

Dieser zweite Ringraum 28 ist axial beidseitig zu den Wälzkörpern der Lager (9, 21), insbesondere des Festlagers und des Loslagers, hin offen ausgeführt, so dass diese mit Öl versorgbar sind.

Zwar führt ein Kanal von der Ausnehmung des Gehäuseteils 1 in den zweiten Ringraum 28, jedoch ist dieser Kanal mit einem Stopfen 24 verschlossen.

Überschüssiges Öl läuft somit durch das Loslager 21 über einen als Blechteil ausgeführten, am Gehäuseteil 1 befestigten Überlauf 14 in den die Getriebestufen umfassenden Innenraum des Getriebes ab.

Der zweite Ringraum 28 ist aus einer Stufenbohrung gebildet, an deren Stufe eine umlaufende Ringnut ausgeführt ist.

Eine in den Ausgleichskanal 13 mündende Radialbohrung, die für eine Druckschmierung optional vorgesehen ist, ist mittels eines Stopfens 26 verschlossen.

Wie in Figur 1.2. gezeigt, ist das Festlager zweiteilig aufgebaut, insbesondere aus zwei Schräglagern, insbesondere Kegelrollenlager. Das beidseitig an den Wälzkörpern des zweiteiligen Festlagers einströmende Öl sammelt sich in einem ringförmigen Bereich axial zwischen den Wälzkörpern und erfährt dort bei der Drehbewegung des Festlagers 9 eine Pumpwirkung, so dass das Öl in einen oberhalb der Lager (9, 21) axial verlaufenden Ölauslass 15 zum die Getriebestufen umfassenden restlichen Innenraum des Getriebes hin.

Der somit realisierte Ölschmierfluss bewirkt einerseits Schmierung der Lager (9, 21) und des Wellendichtrings sowie eine Kühlung des Deckelteils 2 und des Gehäuseteils 1 samt der von diesen beiden Teilen umgebenen Komponenten.

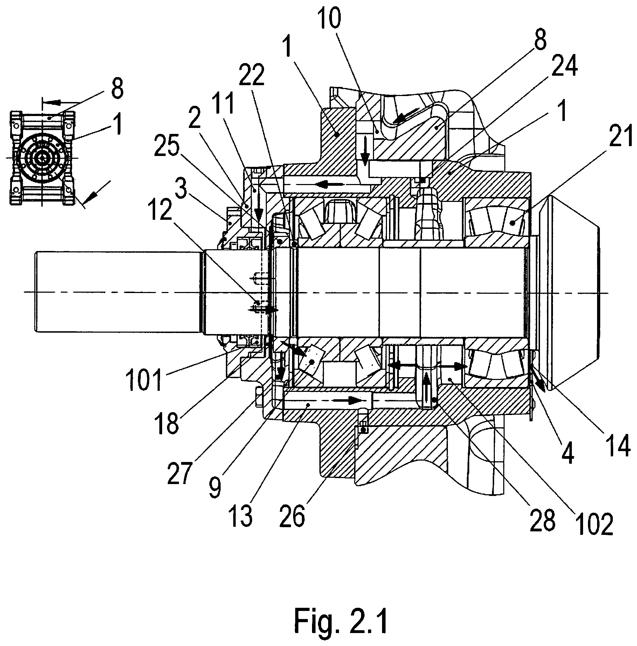

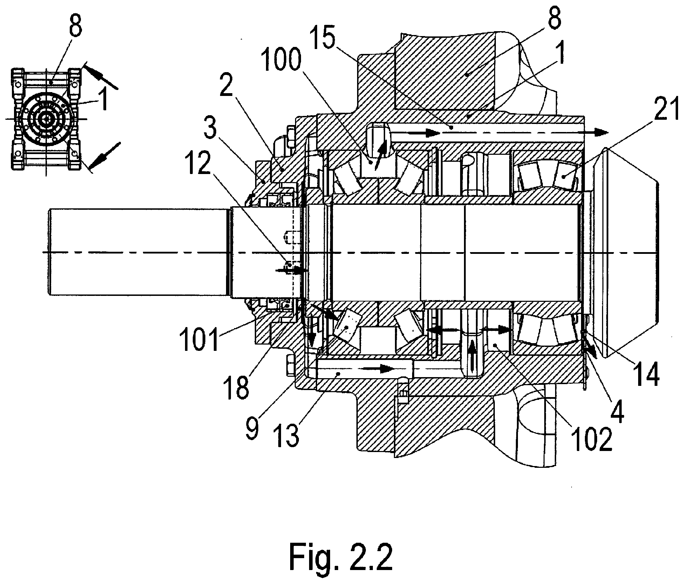

Wie in Figur 2.1 zusammen mit 2.2 gezeigt, weist das dortige Getriebe im Unterschied zur Ausführung nach Figur 1.1 zusammen mit 1.2 ein anderes Deckelteil 2 auf, in welches ein Flanschteil 3 eingesetzt ist.

Axial neben dem Wellendichtring ist ein weiterer Wellendichtring angeordnet, dessen Dichtlippe ebenfalls auf der eintreibenden Welle läuft. Dieser weitere Wellendichtring ist fettgeschmiert, wobei das Fett in einer Fettkammer gespeichert ist, welche axial zwischen einer staubgeschützten Wellendichtung angeordnet ist.

Die staubgeschützte Wellendichtung weist einen Spalt zwischen der eintreibenden Welle und dem Flanschteil 3 auf und ein Blechteil, das in eine Ausnehmung des Flanschteils 3 hineinragt. Außerdem ist an dem Blechteil eine aus Kunststoff gefertigte Staublippe angeordnet, welche
am Flanschteil 3 im Wesentlichen berührend angeordnet ist, wobei das Blechteil geringfügig beabstandet vom Flanschteil 3 angeordnet ist.

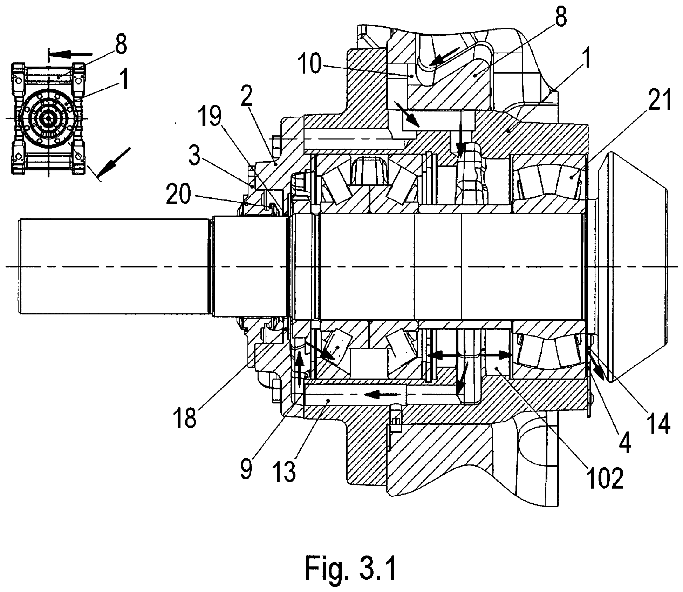

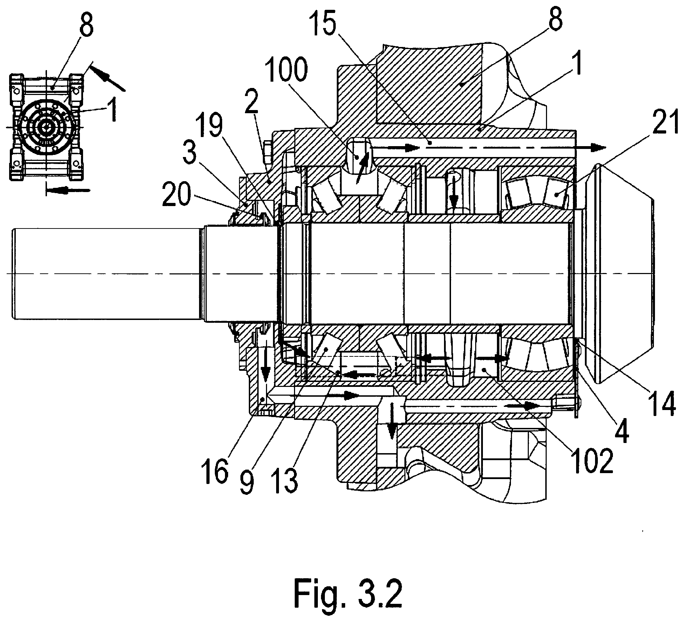

Wie in Figur 3.1 zusammen mit 3.2 gezeigt, weist das dortige Getriebe im Unterschied zur Ausführung nach Figur 1.1 zusammen mit 1.2 ein anderes Deckelteil 2 auf, das die im Gehäuseteil 1 angeordnete, zum Deckelteil 2 hin führende Axialbohrung verschließt.

In eine mittig axial durchgehende Ausnehmung dieses Deckelteils 2 ist ein Flanschteil 3 eingesetzt, welches eine zur eintreibenden Welle hin vorgesehene berührungslose Dichtung aufnimmt. Diese Dichtung benötigt kein Schmieröl und muss vom Schmieröl getrennt werden. Hierzu weist die am Deckelteil 2 ausgeformte Rückhaltewand 18 nur einen Spalt zur eintreibenden Welle hin auf und die am Flanschteil 3 eingesetzte, berührungslose Dichtung dichtet zur eintreibenden Welle ab, falls doch eventuell Öl an der axialen Innenseite der berührungslosen Dichtung auftreten sollte. Somit ist eine erste Dichtung 19 als Spaltdichtung und eine zweite Dichtung 20 als berührungslose Dichtung, insbesondere Labyrinthdichtung, ausgeführt.

Vorzugsweise ist die berührungslose Dichtung als Labyrinthdichtung ausgeführt.

Der Ölfluss ist nun durch einen herausgenommenen Stopfen 24 verändert, welcher Öl aus der Ausnehmung des Gehäuseteils 1 durch eine Radialbohrung in den zweiten Ringraum 28 durchlässt. Denn durch die von der Ausnehmung versorgte Axialbohrung des Gehäuseteils 1 fließt infolge des durch das Deckelteil 2 realisierten Verschlusses kein Öl.

Aus dem zweiten Ringraum 28 werden wiederum die Wälzkörper der Lager 9 und 21 versorgt.

Zusätzlich fließt das Öl aber auch vom zweiten Ringraum 28 durch den Ausgleichskanal 13 zum ersten Ringraum 27 und von dort von axial vorne zu den Wälzkörpern des ersten Schräglagers 9, insbesondere zu den Wälzkörpern des ersten Teils des ersten Schräglagers 9 des Festlagers.

Das mittig im Lager 9 angekommene Öl wird bei der Bewegung des Festlagers wiederum in den Auslass 15 gefördert.

Falls jedoch Öl in den axial zwischen der staubgeschützten Wellendichtung und dem Deckelteil 2 angeordneten Ringraum zwischen Deckelteil 2 und Flanschteil 3 gelangt, wird dieses durch eine nach unten führende Radialbohrung des Deckelteils 2 abgeführt, welche in einen Axialbohrung des Deckelteils 2 mündet, die entweder selbst oder über eine nach weiter unten gerichtete Radialbohrung in den Ölsumpf des Getriebes mündet.

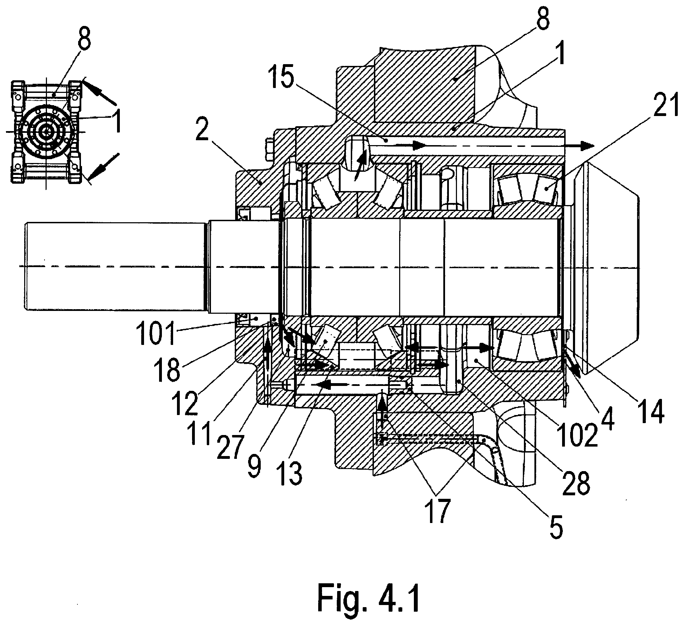

Wie in Figur 4.1 zusammen mit 4.2 gezeigt, weist das dortige Getriebe im Unterschied zur Ausführung nach Figur 1.1 zusammen mit 1.2 ein anderes Deckelteil 2 auf, das wiederum die im Gehäuseteil 1 angeordnete, zum Deckelteil 2 hin führende Axialbohrung verschließt.

Für die Ausführung als Druckschmierung wird der Stopfen 26 entfernt und eine Ölleitung an die im Gehäuseteil 1 ausgeführte Radialbohrung angeschlossen und von dort Öl in eine Axialbohrung hineingedrückt, welche zum zweiten Ringraum 28 hin mittels eines Stopfens 5 verschlossen ist. Die Axialbohrung mündet in einen Kanal, insbesondere der aus einer Axialbohrung und einer Radialbohrung besteht, wobei der Kanal im Deckelteil 2 in den axial zwischen dem im Deckelteil 2 aufgenommenen Wellendichtring und der Rückhaltewand 18 angeordneten Ringraum mündet.

Von diesem Ringraum fließt dann Öl zum ersten Ringraum 27 und von dort einerseits zu den Wälzkörpern des Lagers 9 und andererseits durch eine Axialbohrung, die von der Ausgleichsbohrung in Umfangsrichtung beabstandet ist, in den zweiten Ringraum 28, von dem aus wiederum die Wälzkörper der Lager 9 und 21 mit Öl versorgt werden. Aus dem Lager 21 tritt dann auf der vom zweiten Ringraum 28 axial abgewandten Seite das Öl zum die Getriebestufen umfassenden Innenraum des Getriebes aus.

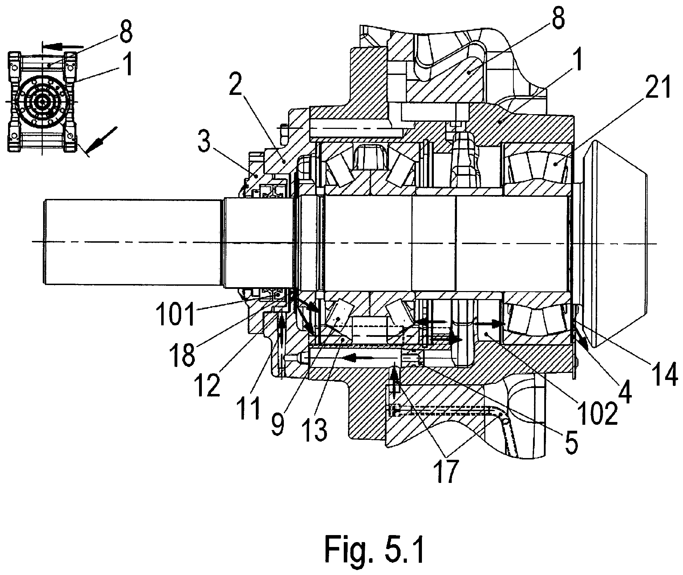

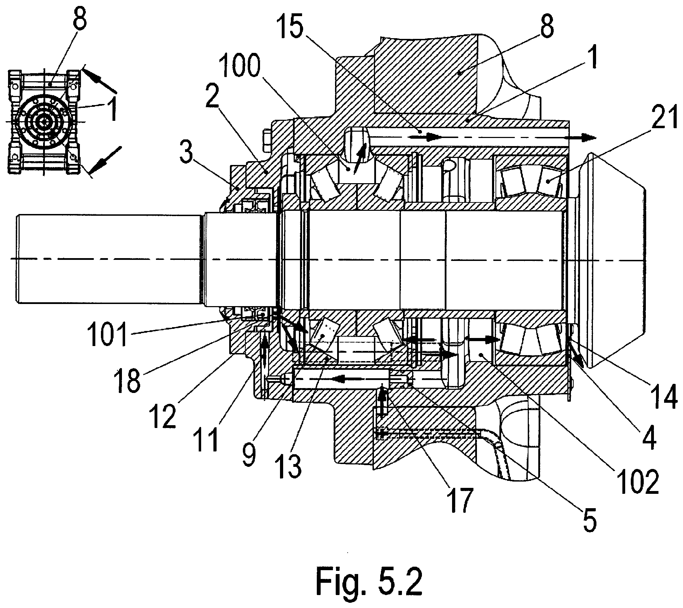

Wie in Figur 5.1 zusammen mit 5.2 gezeigt, weist das dortige Getriebe im Unterschied zur Ausführung nach Figur 4.1 zusammen mit 4.2 ein anderes Deckelteil 2 auf, in welches wiederum ein Flanschteil eingesetzt ist, das einen weiteren wiederum aus der Fettkammer mit Schmierfett versorgten Wellendichtring und die staubgeschützte Wellendichtung aufweist.

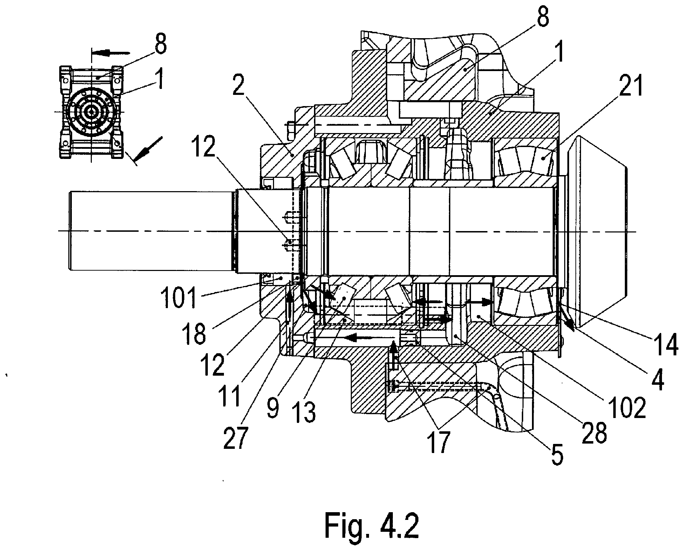

Die Schmierung des der Wellenmutter direkt zugewandten, also erste, Wellendichtrings erfolgt wiederum wie bei der Ausführung nach Figur 4.1 zusammen mit Figur 4.2.

Das mit Druck zugeführte Öl wird durch den im Deckelteil 2 angeordneten Kanal in den Zwischenraum zwischen Flanschteil 3 und Deckelteil 2 gedrückt, wobei der Zwischenraum nicht nur vom Flanschteil 3 und Deckelteil 2, sondern auch vom ersten Wellendichtring begrenzt wird, der somit mit Öl versorgt ist.

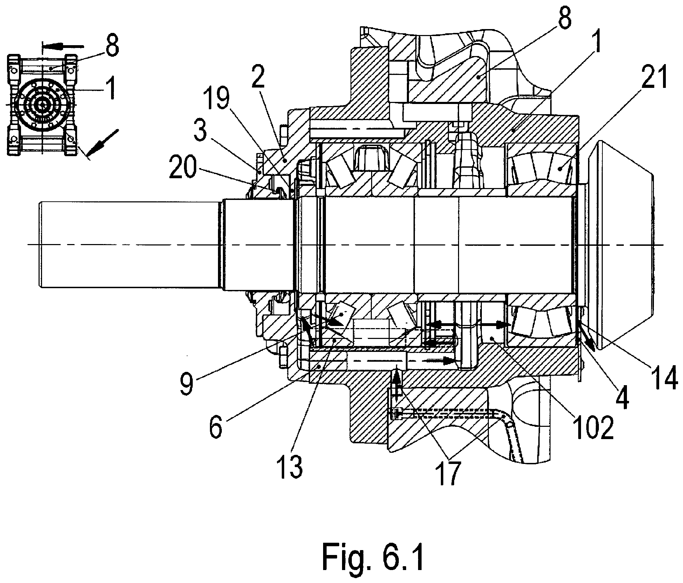

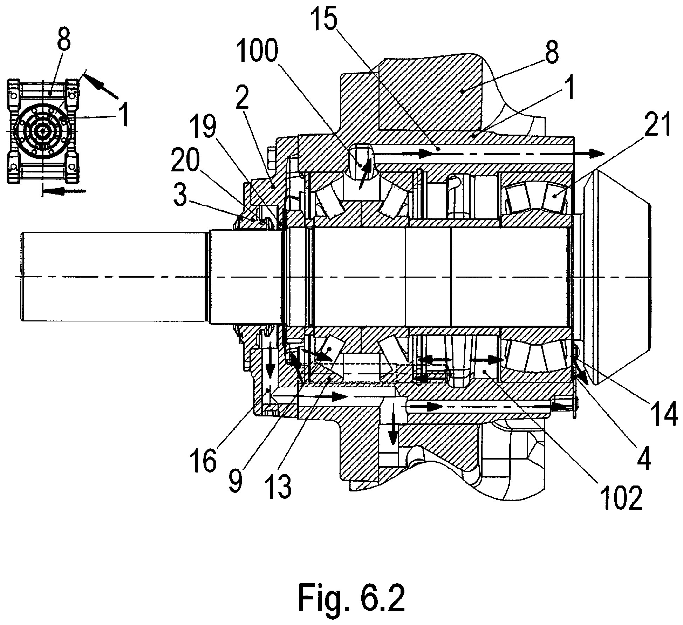

Wie in Figur 6.1 zusammen mit 6.2 gezeigt, weist das dortige Getriebe im Unterschied zur Ausführung nach Figur 4.1 zusammen mit 4.2 ein anderes Deckelteil 2 auf, in welches ein Flanschteil mit einer berührungslosen Dichtung eingesetzt ist. Die berührungslose Dichtung ist wiederum wie bei der Ausführung nach Figur 3.1 zusammen mit 3.2 ausgeführt.

Im Unterschied wird das unter Druck zugeführte Öl aus der Axialbohrung des Gehäuseteils 1 in den zweiten Ringraum 28 gedrückt, weil der erste Ringraum 27 mittels eines Stopfens 6 in der Axialbohrung versperret ist

Über den Ausgleichskanal 13 wird der erste Ringraum 27 aus dem zweiten Ringraum 28 mit Öl versorgt.

Aus dem über die Axialbohrung unter Druck mit Öl befüllten zweiten Ringraum 28 werden wiederum axial beidseitig die Wälzkörper der Lager 9 und 21 versorgt. Das Festlager ist aus zwei Schräglagern, insbesondere Kegelrollenlagern, ausgeführt. Das im axialen Zwischenberiech zwischen den beiden Schräglagern sich ansammelnde Öl wird mittels der Pumpwirkung des aus dem ersten Schräglager 9 und dem weiteren Schräglager ausgeführten Festlagers hochgefördert in den Auslass 15, von dem es in den restlichen Innenraum des Getriebes fließt.

Das aus dem Lager 21 auf seiner vom Lager 9 abgewandten Seite herausfließende Öl wird direkt in den die Getriebestufen umfassenden Innenraum des Getriebes eingeleitet.

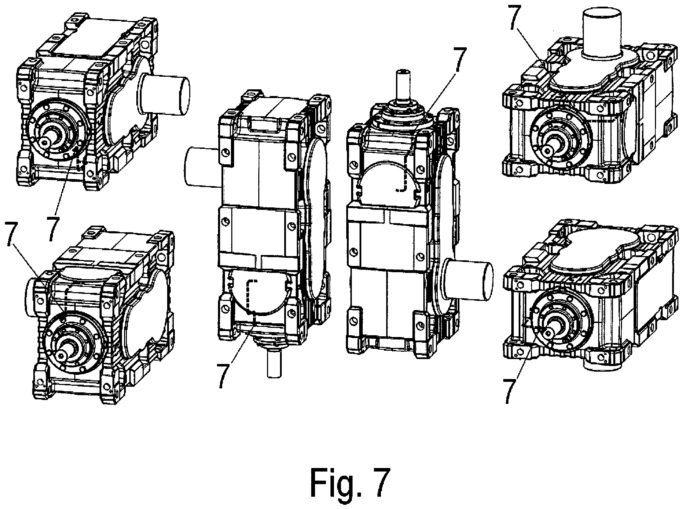

In der Figur 7 sind verschiedene Raumlagen des Getriebes gezeigt, welche mit den vorgenannten Ausführungen abgedeckt werden können. Selbstverständlich kann eine einzige der gezeigten Ausführungen nicht alleine alle gezeigten Raumlagen abdecken. Jedoch ist unter Verwendung aller Ausführungen nach den Figuren 1.1 bis 6.2 die in Figur 7 gezeigte Vielzahl von Raumlagen realisierbar. Darüber hinaus *sind auch andere Raumlagen möglich, die sich durch Schwenken des Getriebes um beliebige Raumachsen ergeben.*

Bei weiteren erfindungsgemäßen Ausführungsbeispielen wird das Getriebe mehrstufig ausgeführt, wobei die eintreibende Getriebestufe weiterhin eine Winkelgetriebestufe und die nachfolgenden Stirnradgetriebestufen sind.

### Bezugszeichenliste

1 Gehäuseteil
2 Deckelteil
3 Flanschteil
4 Blechteil, insbesondere Rückhalteblech
5 erster Stopfen
6 erster Stopfen
7 Druckölleitung
8 Gehäuseteil
9 Lager
10 Einlass für Öl
11 Kanal
12 Überlaufkanal
13 Ausgleichskanal
14 Überlauf
15 Ölauslass
16 Ölrücklaufkanal
17 Druckölzulaufkanal
18 Rückhaltewand
19 erste Dichtung
20 zweite Dichtung
21 Lager
22 Distanzring
23 Stopfen
24 Stopfen
25 Wellenmutter
26 Stopfen
27 erster Ringraum
28 zweiter Ringraum
100 vom Lager geforderter Ölstrom
101 Ölsumpf für Wellendichtring
102 Ölsumpf für Anlaufschmierung

## Patentansprüche

1. Getriebe mit einem ersten Gehäuseteil (1), einem mit dem ersten Gehäuseteil (1) verbundenen zweiten Gehäuseteil (8) und im ersten Gehäuseteil (1) aufgenommenen Lagern (9, 21), mittels derer eine eintreibende Welle drehbar gelagert ist,
wobei die eintreibende Welle durch eine durch das erste Gehäuseteil (1) hindurchgehende Ausnehmung hindurchragt,
wobei das erste Gehäuseteil (1) durch eine zweite durch das zweite Gehäuseteil (8) hindurchgehende Ausnehmung hindurchragt,
wobei ein Deckelteil (2) mit dem ersten Gehäuseteil (1) verbunden ist, **wobei das Deckelteil (2) mit dem ersten Gehäuseteil (1) öldicht gegenüber der Umgebung abgedichtet verbunden ist,**
wobei das Deckelteil (2) oder ein in das Deckelteil (2) eingesetztes Flanschteil (3) eine Dichtungsanordnung aufnimmt, welche zur eintreibenden Welle hin abdichtet,
**wobei** das zweite Gehäuseteil (8) einen Einlass (10) für Schmieröl aufweist, welcher in eine in das erste Gehäuseteil (1) eingebrachte **Axialbohrung, die zu einer dem Deckelteil (2) zugewandten Seite des ersten Gehäuseteils (1) hin offen ausgeführt ist,** und in einen zweiten Ringraum (28) mündet,
die zum Deckelteil (2) hin gewandte Mündung der Axialbohrung vom Deckelteil (2) abgedeckt und/ verschlossen ist, zur Bildung eines Sacklochs,
wobei **zusammen mit dem** zweiten **Gehäuseteil** (8) **) und zusammen mit einer auf der eintreibenden Welle angeordnete Distanzbuchse** Wälzkörper zweier Lager (9, **21**), den ersten Ringraum (27) beranden,
**dadurch gekennzeichnet, dass**
**der zweite Ringraum (28) an einer eine axial ausgerichtete Bohrungsachse aufweisende Stufenbohrung des ersten Gehäuseteils (1) vorgesehen ist welche eine an einer Stufe der Stufenbohrung umlaufende Ringnut aufweist,**
**wobei über eine Ausgleichsbohrung (13) aus dem zweiten Ringraum (28) Schmieröl in einen ersten Ringraum (27) geleitet wird, aus welchem die Wälzkörper eines ersten (9) der Lager, insbesondere eines ersten Schräglagers des Festlagers, mit Schmieröl versorgt werden,**
**wobei der erste Ringraum (27) als topfförmige Vertiefung, im Deckelteil (2) ausgebildet ist und sowohl vom Deckelteil (2) als auch vom ersten Gehäuseteil (1) begrenzt ist,**
**wobei das erste Lager (9) als aus zwei Lagerteilen zweiteilig aufgebautes Festlager ausgeführt ist,**
**wobei jedes der Lagerteile jeweils als Schräglager ausgeführt ist,**
**wobei das beidseitig an den Wälzkörpern des zweiteilig ausgeführten ersten Lagers (9), einströmende Öl in einen ringförmigen Bereich axial zwischen den Wälzkörpern der beiden Lagerteile, einströmt und von dort (100) bei der Drehbewegung des zweiteiligen Lagers (9), in einen oberhalb der Lager (9, 21) angeordneten Ölauslass (15) zum die Getriebestufen umfassenden restlichen Innenraum des Getriebes hin gefördert wird.**

2. Getriebe nach Anspruch 1,
**dadurch gekennzeichnet, dass**
**die Wälzkörper des ersten (9) der Lager (9) im im ersten Ringraum (27) gebildeten Ölsumpf angeordnet sind.**

3. Getriebe nach einem der vorangegangenen Ansprüche,
**dadurch gekennzeichnet, dass**
das durch das zweite (21) der beiden Lager (9, 21), insbesondere das durch das Loslager, hindurchtretendes Öl in den die Getriebestufen des Getriebes umfassenden Innenraum des Getriebes fließt,
insbesondere das durch das zweite (21) der beiden Lager (9, 21), insbesondere das durch das Loslager, hindurchtretendes Öl in den die Getriebestufen des Getriebes umfassenden Innenraum des Getriebes und in den dortigen Ölsumpf (102) fließt.

4. Getriebe nach einem der vorangegangenen Ansprüche,
**dadurch gekennzeichnet, dass**
eine im Innenraum des Getriebes angeordnete Sammelrinne, insbesondere zum Auffangen von heruntertropfendem und/oder herumspritzendem Öl, in den Einlass (10) mündet,
insbesondere wobei die Sammelrinne von der Innenwandung des zweiten Gehäuseteils (8) heruntertropfendes Schmieröl auffängt und dem Einlass (10) zuleitet.

5. Getriebe nach einem der vorangegangenen Ansprüche,
**dadurch gekennzeichnet, dass**
die beiden Lager (9, 21), insbesondere das Loslager und das Festlager, mittels einer auf der eintreibenden Welle angeordneten Distanzbuche voneinander beabstandet sind.

6. Getriebe nach einem der vorangegangenen Ansprüche,
**dadurch gekennzeichnet, dass**
die Dichtungsanordnung einen ersten Wellendichtring oder eine berührungslose Dichtung (19), insbesondere Labyrinthdichtung, aufweist,
insbesondere wobei axial neben dem ersten Wellendichtring ein fettgeschmierter weiterer Wellendichtring angeordnet ist,
insbesondere wobei die Dichtungsanordnung zusätzlich eine staubgeschützte Wellendichtung aufweist.

7. Getriebe nach einem der vorangegangenen Ansprüche,
**dadurch gekennzeichnet, dass**
**der gesamte Innenraum des Getriebes den ringförmigen Bereich, den ersten und zweiten Ringraum (28) sowie den restlichen Innenraum umfasst.**

8. Getriebe nach einem der vorangegangenen Ansprüche,
**dadurch gekennzeichnet, dass**
am ersten Gehäuseteil (1) eine, insbesondere als Blechteil (4) ausgeführte, Rückhaltewand (18) angeordnet ist, wobei zwischen der eintreibenden Welle und der Rückhaltewand (18) ein Spalt vorhanden ist.

9. Getriebe nach einem der vorangegangenen Ansprüche,
**dadurch gekennzeichnet, dass**
die Lager (9, 21), insbesondere das Festlager und das Loslager, von einer auf einen Gewindebereich der eintreibenden Welle aufgeschraubten Wellenmutter gegeneinander verspannt sind.

10. Getriebe nach einem der vorangegangenen Ansprüche,
**dadurch gekennzeichnet, dass**
der von der Wellenmutter (25) in axialer Richtung überdeckte Bereich mit dem von dem Deckelteil (2) in axialer Richtung überdeckten Bereich überlappt.

11. Verfahren zum Herstellen unterschiedlicher Getriebe nach einem der vorangegangenen Ansprüche, insbesondere einer Getriebebaureihe,
wobei **entweder** zur Herstellung eines ersten Getriebes das Deckelteil (2) mit dem ersten Gehäuseteil (1) verbunden wird **oder alternativ** zur Herstellung eines zweiten Getriebes, **anstatt des Deckelteils (2)** ein zweites Deckelteil mit dem ersten Gehäuseteil (1) verbunden wird,
wobei das zweite Deckelteil einen Kanal (11) aufweist, in welchen die Axialbohrung mündet,
wobei der Kanal (11) eine insbesondere im zweiten Deckelteil aufgenommene Dichtungsanordnung, insbesondere den Wellendichtring der Dichtungsanordnung, mit Öl versorgt.

12. **Verfahren nach Anspruch 11,**
**dadurch gekennzeichnet, dass**
beim zweiten Getriebe ein Überlaufkanal (12), insbesondere ein im Deckelteil angeordneter Überlaufkanal (12), einerseits in den die Dichtungsanordnung aufnehmenden Bereich des Deckelteils (2) mündet und andererseits in den ersten Ringraum (27) mündet.

13. **Verfahren nach Anspruch 11 oder 12,**
**wobei als weitere Alternative** zur Herstellung eines dritten Getriebes **anstatt des Deckelteils (2) und anstatt des zweiten Deckelteils** ein drittes Deckelteil mit dem ersten Gehäuseteil (1) verbunden wird,
wobei das dritte Deckelteil einen Kanal (11) aufweist, der in einen die Dichtungsanordnung aufnehmenden Raumbereich mündet und in den ein Druckölzulaufkanal (17) mündet, welcher im ersten Gehäuseteil (1) angeordnet ist.

## Claims

1. A gear unit having a first housing part (1), a second housing part (8) connected to the first housing part (1), and bearings (9, 21) received in the first housing part (1), by means of which bearings an input shaft is rotatably mounted,
wherein the input shaft protrudes through a cutout which passes through the first housing part (1),
wherein the first housing part (1) protrudes through a second cutout which passes through the second housing part (8),
wherein a cover part (2) is connected to the first housing part (1), wherein the cover part (2) is connected to the first housing part (1) sealed off in an oil-tight manner from the surroundings,
wherein the cover part (2) or a flange part (3) inserted into the cover part (2) receives a seal arrangement which seals off towards the input shaft,
wherein the second housing part (8) has an inlet (10) for lubricating oil which opens into an axial bore, which is formed in the first housing part (1) and is embodied open towards a side of the first housing part (1) which faces the cover part (2), and into a second annular space (28),
the opening of the axial bore which faces towards the cover part (2) is covered and closed by the cover part (2), to form a blind hole,
wherein, together with the second housing part (8) and together with a spacer bushing arranged on the input shaft, rolling elements of two bearings (9, 21) form the edge of the first annular space (27),
**characterised in that**
the second annular space (28) is provided on a stepped bore, which has an axially oriented bore axis, of the first housing part (1), which stepped bore has an annular groove running around a step of the stepped bore,
with lubricating oil being conducted out of the second annular space (28) by way of a compensation bore (13) into a first annular space (27), from which the rolling elements of a first one (9) of the bearings, in particular of a first angular contact bearing of the fixed bearing, are supplied with lubricating oil,
with the first annular space (27) being formed as a pot-shaped indentation in the cover part (2) and being limited both by the cover part (2) and by the first housing part (1),
with the first bearing (9) being embodied as a fixed bearing constructed in two parts from two bearing parts,
with each of the bearing parts being embodied in each case as an angular contact bearing,
with the oil which flows in on either side on the rolling elements of the first bearing (9) which is embodied in two parts flowing into an annular region axially between the rolling elements of the two bearing parts and from there (100), upon the rotary movement of the two-part bearing (9), being conveyed into an oil outlet (15) arranged above the bearings (9, 21) towards the remaining interior of the gear unit which encompasses the gear stages.

2. A gear unit according to claim 1,
**characterised in that**
the rolling elements of the first one (9) of the bearings (9) are arranged in the oil sump formed in the first annular space (27).

3. A gear unit according to one of the preceding claims,
**characterised in that**
the oil passing through the second one (21) of the two bearings (9, 21), in particular through the movable bearing, flows into the interior of the gear unit which encompasses the gear stages of the gear unit,
in particular the oil passing through the second one (21) of the two bearings (9, 21), in particular through the movable bearing, flows into the interior of the gear unit which encompasses the gear stages of the gear unit and into the oil sump (102) there.

4. A gear unit according to one of the preceding claims,
**characterised in that**
a collecting channel arranged in the interior of the gear unit, in particular for collecting oil dripping down and/or being splashed around, opens into the inlet (10),
in particular with the collecting channel capturing lubricating oil dripping down from the inner wall of the second housing part (8) and conducting it to the inlet (10).

5. A gear unit according to one of the preceding claims,
**characterised in that**
the two bearings (9, 21), in particular the movable bearing and the fixed bearing, are spaced apart from each other by means of a spacer bushing arranged on the input shaft.

6. A gear unit according to one of the preceding claims,
**characterised in that**
the seal arrangement has a first shaft sealing ring or a contactless seal (19), in particular labyrinth seal,
in particular with a further shaft sealing ring lubricated with grease being arranged axially next to the first shaft sealing ring,
in particular with the seal arrangement additionally having a shaft seal which is protected from dust.

7. A gear unit according to one of the preceding claims,
**characterised in that**
the entire interior of the gear unit encompasses the annular region, the first and second annular spaces (28) and also the rest of the interior.

8. A gear unit according to one of the preceding claims,
**characterised in that**
on the first housing part (1) there is arranged a retaining wall (18), in particular one embodied as a sheet-metal part (4), with a gap being present between the input shaft and the retaining wall (18).

9. A gear unit according to one of the preceding claims,
**characterised in that**
the bearings (9, 21), in particular the fixed bearing and the movable bearing, are braced against one another by a shaft nut screwed onto a threaded region of the input shaft.

10. A gear unit according to one of the preceding claims,
**characterised in that**
the region covered in the axial direction by the shaft nut (25) overlaps with the region covered in the axial direction by the cover part (2).

11. A method for producing different gear units according to one of the preceding claims, in particular a series of gear units,
wherein either in order to produce a first gear unit the cover part (2) is connected to the first housing part (1)
or alternatively in order to produce a second gear unit, instead of the cover part (2) a second cover part is connected to the first housing part (1),
wherein the second cover part has a duct (11) into which the axial bore opens,
wherein the duct (11) supplies a seal arrangement received in particular in the second cover part, in particular the shaft sealing ring of the seal arrangement, with oil.

12. A method according to claim 11,
**characterised in that**
in the case of the second gear unit an overflow duct (12), in particular an overflow duct (12) arranged in the cover part, opens on one hand into that region of the cover part (2) which receives the seal arrangement and on the other hand opens into the first annular space (27).

13. A method according to claim 11 or 12,
wherein as a further alternative in order to produce a third gear unit instead of the cover part (2) and instead of the second cover part a third cover part is connected to the first housing part (1),
wherein the third cover part has a duct (11) which opens into a spatial region which receives the seal arrangement and into which a pressure-oil inflow duct (17) which is arranged in the first housing part (1) opens.

## Revendications

1. Boîte de vitesses, comprenant une première partie de carter (1), une seconde partie de carter (8) reliée à la première partie de carter (1) et des paliers (9, 21) logés dans la première partie de carter (1) et au moyen desquels un arbre d'entrainement est monté rotatif,
l'arbre d'entrainement traversant un évidement qui traverse la première partie de carter (1),
la première partie de carter (1) traversant un second évidement qui traverse la seconde partie de carter (8),
une partie couvercle (2) étant reliée à la première partie de carter (1), la **partie couvercle (2) étant reliée à la première partie de carter (1) de manière étanche à l'huile par rapport à l'environnement,**
la partie couvercle (2), ou une partie bride (3) insérée dans la partie couvercle (2), accueillant un ensemble d'étanchéité qui assure l'étanchéité par rapport à l'arbre d'entrainement,
la seconde partie de carter (8) présentant une entrée (10) pour de l'huile de lubrification, qui débouche dans un **alésage axial, ménagé dans la première partie de carter (1) et ouvert vers un côté de la première partie de carter (1) qui est tourné vers la partie couvercle (2),** et dans un second espace annulaire (28),
l'embouchure de l'alésage axial tournée vers la partie couvercle (2) étant recouverte et fermée par la partie couvercle (2) afin de former un trou borgne,
des corps de roulement de deux roulements (9, 21) bordant le premier espace annulaire (27), **conjointement avec la seconde partie de carter (8) et conjointement avec une douille d'écartement agencée sur l'arbre d'entrainement,**
**caractérisée en ce que**
**le second espace annulaire (28) est fourni au niveau d'un alésage étagé de la première partie de carter (1), ledit alésage présentant un axe d'alésage orienté axialement et présentant une rainure annulaire périphérique au niveau d'un étage de l'alésage étagé,**
**de l'huile de lubrification étant acheminée depuis le second espace annulaire (28), en passant par un alésage de compensation (13), jusqu'à un premier espace annulaire (27) à partir duquel les corps de roulement d'un premier (9) des paliers, en particulier d'un premier palier à contact oblique du palier fixe, sont alimentés en huile de lubrification,**
**le premier espace annulaire (27) étant réalisé sous forme de renfoncement en forme de pot dans la partie couvercle (2) et étant délimité à la fois par la partie couvercle (2) et par la première partie de carter (1),**
**le premier palier (9) étant réalisé sous la forme d'un palier fixe en deux parties de palier,**
**chacune des parties de palier étant réalisée sous la forme d'un palier à contact oblique,**
**l'huile, qui arrive des deux côtés au niveau des corps de roulement du premier palier (9) réalisé en deux parties, arrivant de manière axiale entre les corps de roulement des deux parties de palier dans une région annulaire et, à partir de là (100), étant transportée, en passant par une sortie d'huile (15) agencée au-dessus des paliers (9, 21), vers l'espace intérieur restant, comprenant les étages de transmission, de la boîte de vitesses grâce au mouvement de rotation du palier en deux parties (9).**

2. Boîte de vitesses selon la revendication 1,
**caractérisée en ce que**
**les corps de roulement du premier (9) des paliers (9) sont agencés dans le carter d'huile formé dans le premier espace annulaire (27).**

3. Boîte de vitesses selon l'une quelconque des revendications précédentes,
**caractérisée en ce que**
l'huile traversant le second (21) des deux paliers (9, 21), en particulier l'huile traversant le palier libre, s'écoule dans l'espace intérieur de la boîte de vitesses comprenant les étages de transmission de la boîte de vitesses,
en particulier l'huile traversant le second (21) des deux paliers (9, 21), en particulier l'huile traversant le palier libre, s'écoule dans l'espace intérieur de la boîte de vitesses comprenant les étages de transmission de la boîte de vitesses et dans le carter d'huile (102) qui s'y trouve.

4. Boîte de vitesses selon l'une quelconque des revendications précédentes,
**caractérisée en ce que**
une goulotte collectrice agencée dans l'espace intérieur de la boîte de vitesses, en particulier afin de recueillir l'huile qui goutte et/ou qui est projetée, débouche dans l'entrée (10),
la goulotte collectrice recueillant en particulier l'huile de lubrification qui goutte de la paroi intérieure de la seconde partie de carter (8) et l'acheminant vers l'entrée (10).

5. Boîte de vitesses selon l'une quelconque des revendications précédentes,
**caractérisée en ce que**
les deux paliers (9, 21), en particulier le palier libre et le palier fixe, sont espacés l'un de l'autre au moyen d'une bague d'écartement agencée sur l'arbre d'entrainement.

6. Boîte de vitesses selon l'une quelconque des revendications précédentes,
**caractérisée en ce que**
l'ensemble d'étanchéité présente une première bague d'étanchéité d'arbre ou un joint sans contact (19), en particulier un joint labyrinthe,
une bague d'étanchéité d'arbre supplémentaire lubrifiée à la graisse étant en particulier agencée de manière axiale à côté de la première bague d'étanchéité d'arbre,
l'ensemble d'étanchéité présentant en particulier également un joint d'arbre protégé contre la poussière.

7. Boîte de vitesses selon l'une quelconque des revendications précédentes,
**caractérisée en ce que**
**l'ensemble de l'espace intérieur de la boîte de vitesses comprend la région annulaire, les premier et second espaces annulaires (28), et le reste de l'espace intérieur.**

8. Boîte de vitesses selon l'une quelconque des revendications précédentes,
**caractérisée en ce que**
une paroi de retenue (18), réalisée en particulier sous forme de pièce en tôle (4), est agencée au niveau de la première partie de carter (1), un interstice étant prévu entre l'arbre d'entrainement et la paroi de retenue (18).

9. Boîte de vitesses selon l'une quelconque des revendications précédentes,
**caractérisée en ce que**
les paliers (9, 21), en particulier le palier fixe et le palier libre, sont serrés l'un contre l'autre par un écrou d'arbre vissé sur une région filetée de l'arbre d'entrainement.

10. Boîte de vitesses selon l'une quelconque des revendications précédentes,
**caractérisée en ce que**
la région recouverte par l'écrou d'arbre (25) dans la direction axiale recouvre la région recouverte par la partie couvercle (2) dans la direction axiale.

11. Procédé de fabrication de différentes boîtes de vitesses selon l'une quelconque des revendications précédentes, en particulier d'une série de boîte de vitesses,
la partie couvercle (2) étant reliée à la première partie de carter (1) afin de fabriquer une première boîte de vitesses, **ou,** en variante et afin de fabriquer une seconde boîte de vitesses, une deuxième partie couvercle étant, **à la place de la partie couvercle (2),** reliée à la première partie de carter (1).
la deuxième partie couvercle présentant un canal (11) dans lequel débouche l'alésage axial, le canal (11) alimentant en huile un ensemble d'étanchéité logé en particulier dans la deuxième partie couvercle, en particulier la bague d'étanchéité d'arbre de l'ensemble d'étanchéité.

12. **Procédé selon la revendication 11,**
**caractérisé en ce que**
dans la seconde boîte de vitesses, un canal de trop-plein (12), en particulier un canal de trop-plein (12) agencé dans la partie couvercle, débouche d'une part dans la région de la partie couvercle (2) accueillant l'ensemble d'étanchéité et d'autre part dans le premier espace annulaire (27).

13. **Procédé selon la revendication 11 ou 12,**
une troisième partie couvercle étant, **en variante supplémentaire** pour la fabrication facultative d'une troisième boîte de vitesses, reliée à la première partie de carter (1) **à la place de la partie couvercle (2) et à la place de la deuxième partie couvercle,**
la troisième partie couvercle présentant un canal (11) qui débouche dans une région d'espace accueillant l'ensemble d'étanchéité et dans lequel débouche un canal d'arrivée d'huile sous pression (17) qui est agencé dans la première partie de carter (1).
